# EUROPÄISCHE PATENTSCHRIFT

(11) **EP 1 058 017 B1**
(45) Veröffentlichungstag und Bekanntmachung des Hinweises auf die Patenterteilung: **06.08.2003**
(21) Anmeldenummer: 00108602.4
(22) Anmeldetag: 20.04.2000
(51) Int. Cl.: F16C 33/74, F16C 27/06

(54) **Dichtungsanordnung**
Sealing device
Dispositif d'étanchéité

(30) Priorität: 01.06.1999 DE 19925121
(43) Veröffentlichungstag der Anmeldung: 06.12.2000
(73) Patentinhaber: Carl Freudenberg KG, 69469 Weinheim (DE)
(72) Erfinder: Drucktenhengst, Rolf, 68623 Lampertheim (DE); Grafmüller, Martin, 69488 Birkenau (DE); Fading, Karl, 69514 Laudenbach (DE)

(56) Entgegenhaltungen:
- EP-A- 0 562 160
- EP-B- 0 596 196
- DE-U- 1 917 623
- DE-U- 9 400 766
- GB-A- 2 123 096
- US-A- 4 820 062

## Beschreibung

### Technisches Gebiet

Die Erfindung befaßt sich mit einer Dichtungsanordnung aus einem Elastomerkörper mit einem metallischen Versteifungsring und Dichtlippe und einem Lager für eine Welle in einer Gehäusebohrung.

### Stand der Technik

Durch die EP 0 596 196 B1 ist eine Dichtungsanordnung zur Abdichtung einer durch eine Gehäusewandung geführten Welle bekannt, die einen Radialwellendichtring und ein Wälzlager umfaßt. Das Wälzlager ist in die Dichtungsanordnung integriert. Eine solche Dichtungsanordnung hat eine gute Abdichtung verbunden mit einer langen Gebrauchsdauer. Außerdem können auftretende Schwingungen der rotierenden Welle gedämpft werden. Zum Einsatz gelangen zwei Versteifungsringe, die mit einer Ummantelung aus elastomerem Werkstoff versehen sind. Die Ummantelung kann auch einen Ausgleich von wärmebedingten Toleranzen ergeben.

Auch die EP 0 562 160 B1 zeigt eine mit der vorgenannten Schrift vergleichbare Ausführungsform, die gute Gebrauchseigenschaften zeigt. Auch werden die akustisch störenden Schwingungen reduziert und unerwünschte Geräusche eliminiert.

Die beiden vorstehend behandelten Dichtungsanordnungen sind jedoch mit einem nicht zu vernachlässigenden technischen und damit auch kostenmäßigen Aufwand in ihrer Herstellung verbunden. Ihr Einsatz ist deshalb auf Bereiche, in denen dieser Aufwand gerechtfertigt ist, beschränkt.

Eine einfachere Möglichkeit zur Befestigung eines Dichtrings mit einem Wälzlager in einem Maschinenteil ist aus dem DE-GM 19 17 623 bekannt. Für die Befestigung des Wälzlagers wird dort ein Toleranzring benutzt, der am Außenumfang und am Innenumfang mit einem gummielastischen Werkstoff überzogen ist. Hierdurch soll ein sicherer Sitz des Wälzlagerringes gewährleistet werden, auch wenn Materialien mit unterschiedlichen Wärmeausdehnungskoeffizienten verwendet werden. Besteht beispielsweise das Aufnahmegehäuse aus Leichtmetall und der Wälzlagerring aus Stahl, so wird durch diese Dichtungsanordnung die sich verändernde Toleranz zwischen Aufnahmegehäuse und Lagerring über das Elastomer ausgeglichen. Die Dimensionierung und Auswahl des Elastomers erfolgt dabei in Abhängigkeit von den auszugleichenden Toleranzen. Der Toleranzring und seine Ummantelung sind jedoch für Wellen die keinen optimalen Rundlauf aufweisen nicht geeignet.

Die GB 2 123 096 A zeigt eine Dichtungsanordnung zur Befestigung einer Gleitlagerbusche in einer Gehäusebohrung mit den Merkmalen des Oberbegriffs des Anspruchs 1.

### Darstellung der Erfindung

Der Erfindung liegt die Aufgabe zugrunde eine Dichtungsanordnung zu schaffen, die in ihrem konstruktiven Aufbau möglichst einfach ist und entsprechend preiswert hergestellt werden kann. Sie soll die vorgegebene Dichtungsfunktion wie auch Lagerfunktion voll erfüllen und zwar auch bei Wellen, bei denen Schwingungen auftreten können. Darüber hinaus soll sie im Fall von Schwingungen möglichen Geräuschen entgegenwirken.

Die Lösung der gestellten Aufgabe wird bei einer Dichtungsanordnung der eingangs genannten Gattung erfindungsgemäß dadurch erreicht, daß das Lager aus einer Kunststoff agerbuchse besteht, die von einem elastisch nachgiebigen Elastomerkörper gehalten ist. Es werden somit zwei ineinander greifende Maßnahmen getroffen. Zum einen wird ein Lager verwendet, welches ein aus einer Lagerbuchse bestehendes Gleitlager ist. Zum anderen wird die Lagerbuchse von einem elastisch nachgiebigen Elastomerkörper gehalten, der in die Gehäusebohrung eingefügt ist und eine Dämpfung von möglichen Schwingungen der Welle ergibt. Entsprechend weiche Materialien, die hier zum Einsatz kommen können, sind dem Fachmann geläufig. Zwischen der Wandung der Gehäusebohrung und der Welle ist folglich der Elastomerkörper eingefügt, welcher die Lagerbuchse umfaßt, und an ihren Stirnseiten einschließt, die an der vorgegebenen Stelle die Welle hält. Bevorzugt wird die Lagerbuchse auf ihrer Innenseite mit ringnutförmigen Schmiertaschen versehen, um eine Reduzierung des Verschleißes und eine zusätzliche Dämpfung durch die Fettfüllung zu erreichen.

Auf der der Dichtlippe gegenüberliegenden Außenwand des Elastomerkörpers kann dieser mit Dichtrippen zur statischen Abdichtung in der Gehäusebohrung versehen, sein.

Es ist günstig wenn der in den Elastomerkörper eingebettete metallische Versteifungsring aus einem Ringblech mit an seinen Enden angeordneten und in gegenseitige Richtungen weisende Flanschringe gebildet ist. Dabei greift der eine Flanschring in den Fuß des L-förmigen Querschnittprofils und erteilt diesem die nötige Steifheit. Der andere Flanschring dagegen dient als Anschlagsbegrenzung für die in die Gehäusebohrung einzusetzende Dichtungsanordnung, in dem der Flanschring bei der Montage an der Außenwand des Gehäuses zum Anliegen kommt.

Bevorzugt wird das Ringblech des Versteifungsrings mit einem Absatz versehen, der das Ringblech in einen inneren Ringblechteil mit einem kleineren Durchmesser und einen weiteren Ringblechteil mit einem größeren Durchmesser unterteilt. Das engere Ringblechteil mit zugehörigem Flanschring wird voll in den Elastomerkörper eingebettet. Dagegen wird das weitere Ringblechteil mit seiner radial inneren Fläche mit dem Elastomerkörper verbunden und mit seiner radial äußeren Fläche in das Bohrloch mit Haftsitz eingefügt und liegt hier an der Bohrlochwandung fest an.

Die Lagerbuchse wird radial vom Elastomerkörper eingefaßt. Sie liegt somit radial innerhalb des Elastomerkörpers im wesentlichen in dem vom weiteren Ringblechteil überspannten Bereich, der in etwa mit dem längeren Ständer des "L" übereinstimmt. Die Lagerbuchse kann beispielsweise durch Kleben mit dem Elastomerkörper verbunden sein. Bevorzugt wird jedoch, die Lagerbuchse von dem Elastomerkörper umspritzt.

Der Elastomerkörper mit Versteifungsring, Dichtrippen sowie Dichtlippe und die Lagerbuchse sind zu einer integralen Einheit zusammengefaßt. Dabei ist es günstig, wenn die Lagerbuchse auf ihrem Umfang verteilt mehrere Bohrungen hat, die beim Umspritzen der Buchse mit dem Elastomer mitverfüllt werden. Dieses unterstützt die Einbettung der Lagerbuchse in den Elastomer. Der bevorzugte Anwendungsbereich dieser Dichtungs- und Lagereinheit wird bei Lenkspindeln für elektrisch betriebene Lenkungen gesehen. Durch die neue Dichtungsanordnung wird eine Führung und Lagerung der Lenksäule mit gleichzeitiger Dichtung nach außen und innen erreicht. Es erfolgt eine Entkoppelung zwischen Welle und Gehäuse wodurch Geräusche vermieden werden, die durch Wellenauslenkungen auf das Gehäuse übertragen werden würden.

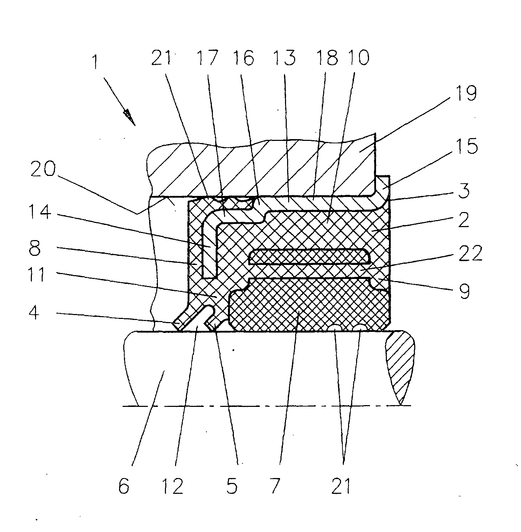

### Kurzbeschreibung der Zeichnung

Anhand eines Ausführungsbeispiels wird die Erfindung näher erläutert.

### Ausführung der Erfindung

In der Figur ist im Schnitt eine bevorzugte Ausführungsform der Dichtungsanordnung 1 gezeigt. Die Dichtungsanordnung besteht im wesentlichen aus dem Elastomerkörper 2 mit dem metallischen Versteifungsring 3 und den Dichtlippen 4 und 5. Die Dichtlippen 4 und 5 umfassen ringförmig die Welle 6. In den Elastomerkörper 2 eingesetzt und integral mit ihm verbunden ist die Lagerbuchse 7. Die Lagerbuchse 7 besteht aus Kunststoff und ist in eine ringförmige Ausnehmung des Elastomerkörpers 2 eingefügt. Mit seinem Fußteil 8 und dem ringförmigen Lappen 9 schließt der Elastomerkörper 2 die Lagerbuchse 7 an ihren Stirnseiten zumindest teilweise ein. Im vorliegenden Fall ist die Lagerbuchse 7 vom Elastomer 2 umspritzt. Hier können die Bohrungen 22 vorgesehen sein, die auf dem Umfang der Lagerbuchse 7 verteilt mit dem Elastomer aufgefüllt werden und eine sichere Verbindung zwischen Buchse 7 und Elastomerkörper 2 zur Folge haben.

Der Elastomerkörper 2 hat ein etwa L-förmiges Querschnittsprofil aus Ständer 10 und Fußteil 8. An der Fußspitze 11 sind unmittelbar die Dichtlippen 4 und 5 angebracht. In den von den Dichtlippen 4 und 5 sowie der Welle 6 gebildeten Innenraum 12 kann ein Schmiermittel eingefügt werden.

Der Versteifungsring 3 wird durch ein Ringblech 13 gebildet, das an seinen Enden jeweils einen Flanschring 14, 15 hat, die in entgegengesetzte Richtungen weisen. Das Ringblech 13 ist mit dem Absatz 16 versehen, so daß zum Fußteil 8 hin ein engeres Ringblechteil 17 mit einem kleineren Durchmesser und in entgegengesetzter Richtung ein weiteres Ringblechteil 18 mit einem größeren Durchmesser gebildet wird. Das engere Ringblechteil 17 mit dem zugehörigen Flanschring 14 ist voll in den Elastomerkörper 2 eingebettet. Das weitere Ringblechteil 18 liegt mit seiner radial äußeren Fläche frei und wird somit nur an seiner radial inneren Fläche mit dem Elastomerkörper 2 verbunden. Der Außenumfang der freiliegenden Fläche des Ringblechteils 18 ist so bemessen, daß bei einer Einfügung der Dichtungsanordnung 1 in das Bohrloch 20 des Gehäuses 19 ein Haftsitz im Bohrloch 20 erreicht wird. Ergänzend hierzu ist der Elastomerkörper 2 auf seiner den Dichtlippen 4 und 5 gegenüberliegenden Außenwand mit Dichtrippen 21 versehen, die zur statischen Abdichtung in der Gehäusebohrung 20 dienen.

Die Lagerbuchse 7 ist im wesentlichen in dem vom weiteren Ringblechteil 18 überdeckten Bereich angeordnet. Auf diese Weise wird zwischen der Lagerbuchse 7 und dem Versteifungsring 3 ein möglichst großer Raum für den elastisch nachgiebigen Elastomerkörper 2 gebildet. Die an dieser Stelle vorhandenen Dicke des Elastomerkörpers 2 richtet sich nach dem Einsatzgebiet der Dichtungsanordnung. Auch das Dichtungsmaterial und die damit verbundene Elastizität wird hiernach ausgewählt. Die Schmiertaschen 21 sind ringnutförmig und ergeben mit Schmierfett gefüllt eine zusätzliche Dämpfung und Verschleißreduzierung.

Die dargestellte Ausführungsform bildet eine integrale Einheit und wird bevorzugt bei Lenkspindeln für elektrisch betriebene Lenkungen angewendet.

## Patentansprüche

1. Dichtungsanordnung (1) aus einem Elastomerkörper (2) mit einem metallischen Versteifungsring (3) und einer Lagerbuchse (7) für eine Welle (6) in einer Gehäusebohrung (20), wobei der Elastomerkörper (2) ein L-förmiges Querschnittsprofil hat, dessen Fußspitze (11) mindestens eine Dichtlippe (4, 5) aufweist, **dadurch gekennzeichnet, dass** die Lagerbuchse (7) aus Kunststoff besteht und von dem elastisch nachgiebigen Elastomerkörper (2) gehaften ist, der die Lagerbuchse (7) an ihren Stirnseiten zumindest teilweise einschließt.

2. Dichtungsanordnung nach Anspruch 1, **dadurch gekennzeichnet, daß** die Lagerbuchse (7) auf ihrer Innenseite mit ringnutförmigen Schmiertaschen (21) versehen ist.

3. Dichtungsanordnung nach Anspruch 1 oder 2, **dadurch gekennzeichnet, daß** der Elastomerkörper (2) auf der der Dichtlippe (4, 5) gegenüberliegenden Außenwand mit Dichtrippen (21) zur statischen Abdichtung in der Gehäusebohrung (20) versehen ist.

4. Dichtungsanordnung nach einem der Ansprüche 1 bis 3, **dadurch gekennzeichnet, daß** der Versteifungsring (3) aus einem Ringblech (13) mit an seinen Enden angeordneten und in gegenseitige Richtungen weisende Flanschringe (14, 15) gebildet ist.

5. Dichtungsanordnung nach einem der Ansprüche 1 bis 4, **dadurch gekennzeichnet, daß** das Ringblech (13) des Versteifungsrings (3) durch einen Absatz (16) in einen engen Ringblechteil (17) mit kleinerem Durchmesser und einem weiteren Ringblechteil (18) mit einem größeren Durchmesser unterteilt ist.

6. Dichtungsanordnung nach einem der Ansprüche 1 bis 5, **dadurch gekennzeichnet, daß** das engere Ringblechteil (17) mit zugehörigem Flanschring (14) voll in den Elastomerkörper (2) eingebettet ist.

7. Dichtungsanordnung nach einem der Ansprüche 1 bis 6, **dadurch gekennzeichnet, daß** das weitere Ringblechteil (18) mit seiner radial inneren Fläche mit dem Elastomerkörper (2) verbunden ist und mit seiner radial äußeren Fläche im Bohrloch (20) mit Haftsitz eingefügt ist.

8. Dichtungsanordnung nach einem der Ansprüche 1 bis 7, **dadurch gekennzeichnet, daß** die Lagerbuchse (7) innerhalb des Elastomerkörpers (2) im wesentlichen in dem vom weiteren Ringblechteil (18) überdeckten Bereich angeordnet ist.

9. Dichtungsanordnung nach einem der Ansprüche 1 bis 8, **dadurch gekennzeichnet, daß** der Elastomerkörper (2) mit Versteifungsring (3), Dichtrippen (21) sowie Dichtlippe (4, 5) und die Lagerbuchse (7) eine integrale Einheit bilden.

10. Dichtungsanordnung nach einem der Ansprüche 1 bis 9, **dadurch gekennzeichnet, daß** die Lagerbuchse (7) auf ihrem Umfang verteilt mit mehreren Bohrungen (22) versehen ist, die mit dem Elastomer des Elastomerkörpers (2) verfüllt sind.

11. Dichtungsanordnung nach einem der Ansprüche 1 bis 10, **dadurch gekennzeichnet, daß** die Dichtungs- und Lagereinheit bei Lenkspindeln für elektrisch betriebene Lenkungen verwendet wird.

## Claims

1. A sealing arrangement (1) comprising an elastomeric body (2) having a metallic stiffening ring (3) and a bearing bushing (7) for a shaft (6) in a housing bore (20), the elastomeric body (2) having an L-shaped cross-sectional profile, the toe (11) of which has at least one sealing lip (4, 5), **characterized in that** the bearing bushing (7) is made from plastic and is held by the elastically compliant elastomeric body (2) which at least partially encloses the bearing bushing (7) on its end sides.

2. A sealing arrangement according to claim 1, **characterized in that** the bearing bushing (7) is provided on its inner side with annular-groove-shaped lubricating pockets (21).

3. A sealing arrangement according to either of claims 1 and 2, **characterized in that** the elastomeric body (2) is provided on the outer wall, which lies opposite the sealing lip (4, 5), with sealing ribs (21) for statically sealing it in the housing bore (20).

4. A sealing arrangement according to any one of claims 1 to 3, **characterized in that** the stiffening ring (3) is formed from an annular plate (13) having flange rings (14, 15) arranged at its ends and pointing in opposite directions.

5. A sealing arrangement according to any one of claims 1 to 4, **characterized in that** the annular plate (13) of the stiffening ring (3) is divided by a step (16) into a narrow annular plate part (17) having a smaller diameter and a further annular plate part (18) having a larger diameter.

6. A sealing arrangement according to any one of claims 1 to 5, **characterized in that** the narrower annular plate part (17) is completely embedded with the associated flange ring (14) in the elastomeric body (2).

7. A sealing arrangement according to any one of claims 1 to 6, **characterized in that** the further annular plate part (18) is connected with its radially inner surface to the elastomeric body (2) and is fitted with its radially outer surface in the drilled hole (20) with a tight fit.

8. A sealing arrangement according to any one of claims 1 to 7, **characterized in that** the bearing bushing (7) is arranged within the elastomeric body (2) essentially in the region covered by the further annular plate part (18).

9. A sealing arrangement according to any one of claims 1 to 8, **characterized in that** the elastomeric body (2), having a stiffening ring (3), sealing ribs (21) and sealing lip (4, 5), and the bearing bushing (7) form an integral unit.

10. A sealing arrangement according to any one of claims 1 to 9, **characterized in that** the bearing bushing (7) is provided with a plurality of bores (22) which are distributed around its circumference and are filled with the elastomer of the elastomeric body (2).

11. A sealing arrangement according to any one of claims 1 to 10, **characterized in that** the sealing and bearing unit is used in steering spindles for electrically operated steering systems.

## Revendications

1. Dispositif d'étanchéité (1) formé d'un corps élastomère (2) pourvu d'une bague de renforcement métallique (3) et d'un coussinet (7) pour un arbre (6) dans un alésage (20), le corps élastomère (2) ayant un profil dont la section transversale a la forme d'un L dont la pointe (11) est pourvue d'au moins une lèvre d'étanchéité (4, 5), **caractérisé en ce que** le coussinet (7) est en matière plastique et est maintenu par le corps élastomère (2) élastique et flexible qui entoure le coussinet (7), au moins partiellement, sur ses côtés frontaux.

2. Dispositif d'étanchéité selon la revendication 1, **caractérisé en ce que** le coussinet (7) est pourvu, sur son côté intérieur, de creux de lubrification (21) en forme de gorge annulaire.

3. Dispositif d'étanchéité selon la revendication 1 ou 2, **caractérisé en ce que** le corps élastomère (2) est pourvu, sur la paroi extérieure opposée à la lèvre d'étanchéité (4, 5), de nervures d'étanchéité (21) pour l'étanchéité statique dans l'alésage (20).

4. Dispositif d'étanchéité selon l'une des revendications 1 à 3, **caractérisé en ce que** la bague de renforcement (3) est formée d'une tôle annulaire (13) pourvue, à ses extrémités, d'anneaux de bridage (14, 15) dirigés dans des directions opposées.

5. Dispositif d'étanchéité selon l'une des revendications 1 à 4, **caractérisé en ce que** la tôle annulaire (13) de la bague de renforcement (3) est divisée, par un épaulement (16), en une partie de tôle annulaire étroite (17) pourvue d'un plus petit diamètre et une partie de tôle annulaire plus large (18) pourvue d'un plus grand diamètre.

6. Dispositif d'étanchéité selon l'une des revendications 1 à 5, **caractérisé en ce que** la partie de tôle annulaire plus étroite (17) est totalement noyée, avec l'anneau de bridage (14) associé, dans le corps élastomère (2).

7. Dispositif d'étanchéité selon l'une des revendications 1 à 6, **caractérisé en ce que** la partie de tôle annulaire plus large (18) est reliée au corps élastomère (2) avec sa surface interne dans le sens radial et est insérée avec un ajustement collant dans l'alésage (20) avec sa surface externe dans le sens radial.

8. Dispositif d'étanchéité selon l'une des revendications 1 à 7, **caractérisé en ce que** le coussinet (7) est situé essentiellement dans la zone couverte par la partie de tôle annulaire plus large (18) à l'intérieur du corps élastomère (2).

9. Dispositif d'étanchéité selon l'une des revendications 1 à 8, **caractérisé en ce que** le corps élastomère (2) pourvu de la bague de renforcement (3), les nervures d'étanchéité (21), ainsi que la lèvre d'étanchéité (4, 5) et le coussinet (7), forment une unité intégrale.

10. Dispositif d'étanchéité selon l'une des revendications 1 à 9, **caractérisé en ce que** le coussinet (7) est pourvu de plusieurs alésages (22) répartis sur sa circonférence qui sont remplis par l'élastomère du corps élastomère (2).

11. Dispositif d'étanchéité selon l'une des revendications 1 à 10, **caractérisé en ce que** l'unité d'étanchéité et de support est utilisée avec des barres de timonerie de direction pour des directions à commande électrique.
